# EUROPÄISCHE PATENTANMELDUNG

(11) **EP 0 761 363 A1**
(43) Veröffentlichungstag der Anmeldung: **12.03.1997**
(21) Anmeldenummer: 96111959.1
(22) Anmeldetag: 24.07.1996
(51) Int. Cl.: B23K 9/20, B23Q 7/08, B65G 43/02

(54) **Vorrichtung zum Zuführen von zu verarbeitenden Kleinteilen zu einem Verarbeitungsgerät, insbesondere Bolzenzuführvorrichtung für ein Bolzenschweissgerät**

(30) Priorität: 06.09.1995 DE 19532937
(71) Anmelder: TRW NELSON BOLZENSCHWEISSTECHNIK GMBH & CO. KG, D-58285 Gevelsberg (DE)
(72) Erfinder: Schwiete, Bernd, 58454 Witten (DE)
(74) Vertreter: Eder, Eugen, Dipl.-Ing.

(57) **Zusammenfassung**

Die Erfindung betrifft eine Vorrichtung zum Zuführen von zu verarbeitenden Kleinteilen zu einem Verarbeitungsgerät, insbesondere Bolzenzuführvorrichtung für ein Bolzenschweißgerät, mit einer einen Vorratsbehälter zur Aufnahme der zuzuführenden Kleinteile aufweisenden Zuführeinheit und mit einem die Zuführeinheit und das Verarbeitungsgerät verbindenden Verbindungselement, welches einen Verbindungskanal für den Transport der Kleinteile aufweist. Zur Überwachung des ordnungsgemäßen Zustandes und/oder der korrekten Verbindung des Verbindungselements (5) mit der Zuführeinheit und/oder dem Verarbeitungsgerät weist das Verbindungselement (5) im wesentlichen über seine gesamte Länge elektrisch leitende Mittel (6) auf, wobei eine Meßvorrichtung (13) vorgesehen ist, welche mit zumindest einem Meßanschluß mit einem Ende der elektrisch leitenden Mittel (6) verbunden ist.

## Beschreibung

Die Erfindung betrifft eine Vorrichtung zum Zuführen von zu verarbeitenden Kleinteilen zu einem Verarbeitungsgerät, insbesondere Bolzenzuführvorrichtung für ein Bolzenschweißgerät, mit den Merkmalen des Oberbegriffs des Patentanspruchs 1.

Als Stand der Technik ist bereits eine Schweißvorrichtung bekannt (DE 44 03 541 A1), bei der die Bolzen von einer Zuführeinheit oder Magazin über einen Schlauch einer Schweißpistole bzw. einem Schweißkopf zugeführt werden. Dies geschieht üblicherweise mittels Blas- oder Preßluft, um eine schnelle Zuführung von Bolzen zu gewährleisten. Der Schlauch kann auch lösbar mit der Zuführeinheit bzw. der Schweißpistole verbunden werden.

Nachteiligerweise kann bei dieser bekannten Vorrichtungen durch einen zerstörten Schlauch bzw. durch eine Unterbrechung der Verbindung zwischen der Bolzenschweißpistole und dem Magazin die Bedienperson durch unkontrolliert zugeführte Bolzen gefährdet werden. Durch einen lösbaren Schlauch besteht weiterhin die Gefahr, daß ein Anschließen des Schlauchs einfach vergessen werden kann. Besonders bei der Zuführung von Bolzen durch Preßluft besteht durch deren geschoßartige Wirkung ein erhebliches Sicherheitsrisiko für die Bedienperson.

Der vorliegenden Erfindung liegt daher die Aufgabe zugrunde, eine Vorrichtung zum Zuführen von zu verarbeitenden Kleinteilen zu einem Verarbeitungsgerät, insbesondere Bolzenzuführvorrichtung für ein Bolzenschweißgerät, zu schaffen, bei der eine Gefährdung von Bedienpersonen auch dann ausgeschlossen ist, wenn der Schlauch bzw. das Verbindungselement beschädigt oder vollkommen zerstört ist.

Die Aufgabe wird erfindungsgemäß mit den kennzeichnenden Merkmalen des Anspruchs 1 gelöst.

Das Vorsehen von elektrischen Mitteln über die gesamte Länge des Verbindungselements und von einer Meßvorrichtung, die mit zumindest einem Meßanschluß mit einem Ende der elektrisch leitenden Mittel verbunden ist, ermöglicht eine Überwachung des ordnungsgemäßen bzw. korrekten Zustandes und/oder der korrekten Verbindung des Verbindungselements mit der Zuführeinheit und/oder dem Verarbeitungsgerät.

Das Verbindungselement, insbesondere der Schlauch, ist hierbei über im wesentlichen die gesamte Länge mit elektrisch leitenden Mitteln ausgestattet, wobei diese Mittel vorzugsweise als Streifen, Draht oder Drahtgeflecht ausgeführte elektrische Leiter ausgebildet sind, die auf oder in das Verbindungselement einbringbar sind.

Das Verbindungselement kann natürlich auch selbst aus zumindest einer Schicht (im Mantel) elektrisch leitenden Materials bestehen oder von einem elektrisch leitendem Belag überzogen werden.

Besonders vorteilhaft bei der Ausstattung mit einfachen konstruktiven Mitteln, wie Belag, Draht, Drahtgeflecht o.ä., ist nicht nur deren kostengünstiger Faktor, sondern auch die Möglichkeit diese elektrisch leitenden Mittel nachträglich an eine bereits bestehende Vorrichtung anzubringen. Dies könnte z.B. durch Aufkleben oder ähnliche feste Verbindungen zwischen Mittel und Verbindungselement erfolgen.

In einer bevorzugten Ausführungsform ist das Verbindungselement als flexibler Schlauch ausgebildet, was vorteilhafterweise ebenfalls sehr kostengünstig ist und eventuell eine nachträgliche Aufrüstung bereits bestehender Vorrichtungen erlaubt. Das Verbindungselement kann natürlich auch als eventuell offener Kanal, Schlauch, Rohr, Schacht oder ähnliches ausgeführt werden.

In der Ausführungsform als Schlauch kann dieser Schlauch mehrere Mäntel aufweisen, wobei zumindest ein Mantel über die gesamte Länge elektrisch leitende Mittel aufweist. Dies geschieht u.a. z.B. durch Einlagerung eines Drahtes oder Drahtgeflechts in den Mantel bzw. durch deren Anordnung außen am Mantel. Beispielsweise könnte der eigentliche Schlauch von zumindest einem auch als Sicherheitsschlauch dienenden weiteren Schlauch gänzlich umfaßt werden, wobei die elektrisch leitenden Mittel auf oder in dem Sicherheitsschlauch oder zwischen dem eigentlichen flexiblen Schlauch und dem Sicherheitsschlauch ausgebildet sind.

Auf diese Weise wird z.B. auch ein nachträgliches erfindungsgemäßes Aufrüsten einer bestehenden Vorrichtung ermöglicht.

Das Verbindungselement bzw. der biegbare Schlauch kann so über seine gesamte Länge durch einfache und kostengünstige Mittel elektrisch leitend gemacht werden und bei der Ausführungsform mit mehreren Mänteln, beispielsweise mit einem Sicherheitsschlauch, zusätzlich zur Stabilität der Verbindung beitragen.

Das Verbindungselement kann an einem oder beiden Enden erste Kupplungselemente aufweisen. Über diese ersten Kupplungselemente kann das Verbindungselement mit an der Zuführeinheit und/oder dem Verarbeitungsgerät vorgesehenen komplementären zweiten Kupplungselementen mit der Zuführeinheit und/oder dem Verarbeitungsgerät lösbar verbunden sein. Dies ermöglicht einen einfachen Wechsel von beispielsweise schadhaften Verbindungselementen bzw. einen Austausch unterschiedlicher Verbindungselemente beispielsweise für die Zufuhr oder Bestückung mit unterschiedlichen Kleinteilen. Die elektrisch leitenden Mittel sind hierbei über die ersten Kupplungselemente elektrisch leitend mit den zweiten Kupplungselementen verbunden, wobei wenigstens ein zweites Kupplungselement mit einem Meßanschluß der Meßvorrichtung verbunden ist.

Diese Anordnung ermöglicht vorteilhafterweise zusätzlich eine Überwachung der korrekten Kupplungsverbindung bzw. der Verbindung zwischen ersten und zweiten Kupplungselementen.

Die Meßvorrichtung zur Überwachung des ordnungsgemäßen Zustandes der Verbindung bzw. des Verbindungselements kann dabei als Strom-, Spannungs-, Widerstands- oder Reflexionsmeßvorrichtung (z.B. TDR-Messung - Time Domain Reflectometry), oder eine Kombination daraus ausgeführt werden.

Dadurch ist eine einfache Überprüfung, z.B. ob der Schlauch bzw. das Verbindungselement an beiden Enden mit der Zuführeinheit bzw. dem Verarbeitungsgerät fest verbunden ist, möglich. Eine empfindliche und dadurch kompliziertere Meßvorrichtung kann aber auch den Zustand der Verbindung, z.B. gedehnt, geknickt, gequetscht oder gerissen, überprüfen. Hierbei ist eine Vielzahl von Varianten der verschiedenen Meßvorrichtungen mit unterschiedlichen elektrischen Mitteln denkbar. Beispielsweise können über eine exaktere Widerstandsmessung die durch Dehnung, Quetschung oder ähnlichem beanspruchten elektrisch leitenden Mittel, wie z.B. Draht, Drahtgeflecht, Dehnungsmeßstreifen, Belag o.ä., festgestellt werden.

Die aufwendigere Ausführung mit einer Reflexionsmeßvorrichtung, insbesondere TDR-Messung (Reflexionszeitmessung), erlaubt dafür zusätzlich die genaue Bestimmung und Lokalisierung von Störungen in der Verbindung. Hierdurch werden Beschädigungen, z.B. des Mantels durch Quetschungen, Knicke, o.ä., früher erkennbar.

Durch die Ausführungsform mit einem Abschlußwiderstand bzw. Kurzschlusses an der Zuführeinheit oder am Verarbeitungsgerät ist auch eine Messung über einen Anschluß über das Verbindungselement zum anderen Anschluß und zurück möglich.

Durch ein Vorsehen eines definierten Abschlußwiderstandes bzw. von elektrischen Mitteln an einem Ende des Verbindungselementes, beispielsweise integriert in die ersten oder zweiten Kupplungselemente, sind bei einer Ausführungsform mit zumindest zwei voneinander unabhängig leitenden elektrischen Mitteln auch andere weniger aufwendige Messungen als eine Reflexionsmessung an dem anderen Ende des Verbindungselementes möglich. Die Meßvorrichtung ist hierbei mit zumindest einem seiner Meßanschlüsse mit dem anderen Ende des Verbindungselementes elektrisch leitend verbunden.

In einer bevorzugten Ausführungsform der Erfindung ist eine Steuervorrichtung, wie in DE 44 03 541 A1 offenbart, für die Zufuhr von zu verarbeitenden Kleinteilen vorgesehen. Diese bekannte Steuervorrichtung gibt die Zufuhr von weiteren Bolzen aus einem Magazin nur dann frei, wenn sie in üblicher Weise ein Nichtvorhandensein eines Bolzens im Schweißkopf festgestellt hat.

Bei einer logischen Verknüpfung der Ausgangssignale der Meßvorrichtung mit dem Eingang der Steuervorrichtung kann zusätzlich zu der bekannten Freigabebedingung für ein weiteres zu verarbeitendes Kleinteil diese Freigabe von dem mittels der Meßvorrichtung feststellbaren ordnungsgemäßen Zustand und/oder der Verbindung des Verbindungselements abhängig gemacht werden.

Hierdurch kann vorteilhafterweise zusätzlich zu einer Fehlermeldung, z.B. mittels Alarm, eine Notabschaltung erfolgen, wodurch eine Zufuhr von Kleinteilen im Falle einer Störung automatisch unterbunden wird.

Die Meßvorrichtung und die Steuervorrichtung können vorteilhafterweise aus Kosten-, Platz- und Funktionsgründen in einem Gehäuse integriert sein.

In einer bevorzugten Ausführungsform der Erfindung sind die Meßpunkte, der Anschluß des Verarbeitungsgeräts und der Anschluß des Vorratsbehälters z.B. mit einer Meßspannung in Form einer Niederspannung einer Batterie beaufschlagt. Ein zur Batterie in Reihe geschaltetes Spannungsmeßgerät mißt dann die Referenzspannung solange sich die gesamte Verbindung in einem ordnungsgemäßen Zustand befindet. Ein Störfall, z.B. Lösen oder Verschlechtern der mechanischen Verbindung für die Zufuhr von zu verarbeitenden Kleinteilen, ist so durch ein Absinken oder gänzliches Fehlen dieser Spannung bemerkbar. Dieses Signal kann dann wie oben erwähnt zu verschiedenen das Sicherheitsrisiko unterbindenden Aktionen, z.B. in Form eines akustischen, optischen Alarms, einer Notabschaltung o.ä., verwandt werden.

Weitere Ausführungsformen der Erfindung ergeben sich aus den Unteransprüchen.

Die Erfindung wird nachfolgend anhand eines in der Zeichnung dargestellten Ausführungsbeispiels einer Bolzenzuführvorrichtung für das Zuführen von Bolzen zu einer Schweißpistole bzw. zu einem Schweißkopf näher erläutert. In der Zeichnung zeigen:
- Fig. 1: eine schematische Darstellung der wesentlichen Teile einer Bolzenschweißvorrichtung, welche mit einer Bolzenzuführvorrichtung nach der Erfindung ausgerüstet ist und
- Fig. 2: eine schematische Darstellung einer weiteren Ausführungsform der Erfindung.

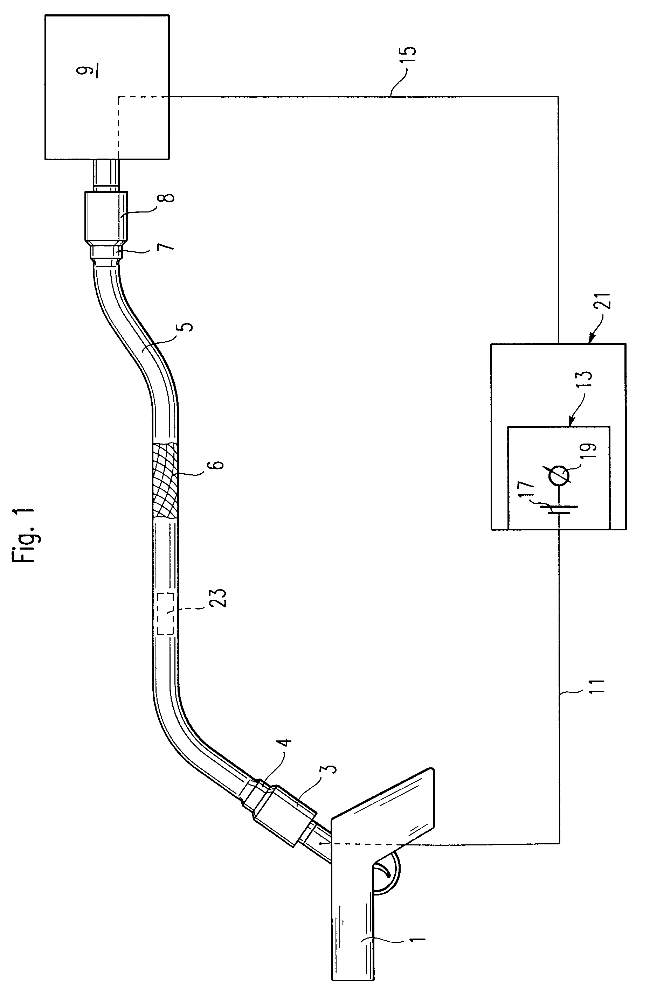

Fig. 1 zeigt eine schematische Darstellung der wesentlichen Teile einer Bolzenschweißvorrichtung, welche mit einer Bolzenzuführvorrichtung nach der Erfindung ausgerüstet ist.

Aus Gründen der Übersichtlichkeit wurde in Figur 1 der Bolzenschweißkopf 1 lediglich schematisch dargestellt, der selbstverständlich in üblicher Weise mit einer nicht dargestellten Steuer- und Stromversorgungseinheit einer Bolzenschweißvorrichtung verbunden ist.

Am Bolzenschweißkopf 1 ist ein Verbindungsschlauch 5 mit einem ersten Kupplungselement 4 über ein dazu komplementäres zweites Kupplungselement 3 des Bolzenschweiskopfes 1, beispielsweise in Form eines angeflanschten Stutzens, lösbar angeordnet. In dem Verbindungsschlauch 5 ist, wie im Teilschnitt in der Zeichnung ersichtlich, ein Drahtgeflecht 6 über seine gesamte Länge eingelagert und mit ersten Kupplungselementen 4 bzw. 7 elektrisch leitend verbunden. Das Endstück bzw. das erste Kupplungselement 4 des Verbindungsschlauchs 5 ist mit dem dazu komplementären Kupplungselement 3 des Bolzenschweißkopfes 1 und das erste Kupplungselement 7, beispielsweise in Form eines angeflanschten Stutzens, mit einem dazu komplementären zweiten Kupplungselement 8 einer als Zuführeinheit fungierenden Bolzenfördereinheit 9 lösbar elektrisch verbunden. Die Bolzenfördereinheit 9 umfaßt dabei nicht näher dargestellte übliche Mittel zur Vereinzelung von Bolzen 23.

Auf diese Weise besteht eine elektrisch leitende Verbindung von dem zweiten Kupplungselement 3 des Bolzenschweißkopfes 1 über den Verbindungsschlauch 5 bzw. sein Drahtgeflecht 6 und seine ersten Kupplungselemente 4, 7 bis zu dem zweiten Kupplungselement 8 der Bolzenfördereinheit 9.

Das zweite Kupplungselement 3 des Bolzenschweißkopfes 1 und das zweite Kupplungselement 8 der Bolzenfördereinheit 9 sind jeweils über Leitungen 11 bzw. 15 an die Meßanschlüsse einer Meßvorrichtung 13 angeschlossen. Die Meßvorrichtung 13 ist in dem speziellen Ausführungsbeispiel als Niedergleichspannungsquelle 17, z.B. in Form einer Batterie, und einem in Reihe geschalteten Spannungsmeßgerät 19 ausgebildet. Die Meßvorrichtung 13 ist hierzu in einer nur schematisch dargestellten Steuervorrichtung 21, die die Zufuhr von Bolzen 23 von der Bolzenfördereinheit 9 zum Bolzenschweißkopf 1 regelt, integriert.

Die Steuervorrichtung 21 erfaßt in üblicher Weise über eine nicht dargestellte Leitung ein Vorhandensein bzw. Nichtvorhandensein eines Bolzens 23 im Schweißkopf 1 und steuert entsprechend über eine ebenfalls nicht dargestellte Leitung die Zufuhr der Bolzen 23 aus der Bolzenfördereinheit 15. Diese nicht näher dargestellten Leitungen können vorteilhafterweise einen bzw. zwei Pole einer mehrpoligen Leitung belegen, dessen andere Pole zur Lieferung eines Meßsignals für die Meßvorrichtung 13 dienen, da diese Leitungen dieselben Punkte miteinander verbinden. Bei einer nachträglichen Aufrüstung einer bereits bestehenden Anlage wäre eine doppelte Leitung für Steuervorrichtung 21 und Meßvorrichtung 13, z.B. durch den Austausch der alten Leitungen der Steuervorrichtung 21 mit einer mehrpoligen Leitung, zu vermeiden. Diese mehrpolige Leitung dient dann mit getrennten Kanälen für die Signale der Steuervorrichtung 21 und Meßvorrichtung 13.

Durch die Integrierung der Meßvorrichtung 13 in der Steuervorrichtung 21 und deren Koppelung ist nicht nur ein durch die Meßvorrichtung im Störfall ausgelöster optischer oder akustischer Alarm mit z.B. Notabschaltung, sondern auch ein einfacher direkter Eingriff in die Zufuhr von Bolzen aus der Bolzenfördereinheit 9 möglich. Hierzu kann die Steuervorrichtung 21 beispielsweise zusätzlich zu einer ersten Freigabebedingung, nämlich dem festgestellten Nichtvorhandensein eines Bolzens 23 in dem Bolzenschweißkopf 1, mit einer weiteren Freigabebedingung, nämlich einer korrekten Spannung am Meßgerät 19, ausgestattet sein bzw. es können die Bedingungen logisch UND-verknüpft werden, ohne die eine weitere Zufuhr von Bolzen aus der Bolzenfördereinheit 9 nicht erfolgen kann.

Auf diese Weise gewährleistet die erfindungsgemäße Vorrichtung zum Zuführen von verarbeitenden Kleinteilen zu einem Verarbeitungsgerät, insbesondere Bolzenzuführvorrichtung für ein Bolzenschweißgerät, eine einfache, aber wirksame Überwachung des ordnungsgemäßen Zustandes der Verbindung zwischen Zuführeinheit bzw. Bolzenfördereinheit 9 und Verarbeitungsgerät bzw. Bolzenschweißkopf 1. Hierdurch kann auf einfache und kostengünstige Weise ein Sicherheitsrisiko für die Bedienperson vermieden werden.

Statt einer Spannungsquelle kann selbstverständlich auch eine Stromquelle oder ein hochfrequentes Signal (für eine Reflexionsmessung) mit entsprechender Meßvorrichtung verwandt werden. Die Messung kann in jedem Fall dauernd oder jeweils nur unmittelbar vor dem Zuführvorgang erfolgen.

Im Falle eines Fehlers sind viele Signal-/Alarmmöglichkeiten bzw. dadurch ausgelöste Aktionen denkbar. Nur als einige Beispiele von vielen seien hier das Blockieren der Zuführung, Notabschaltung sowie optische und akustische Fehlersignale erwähnt.

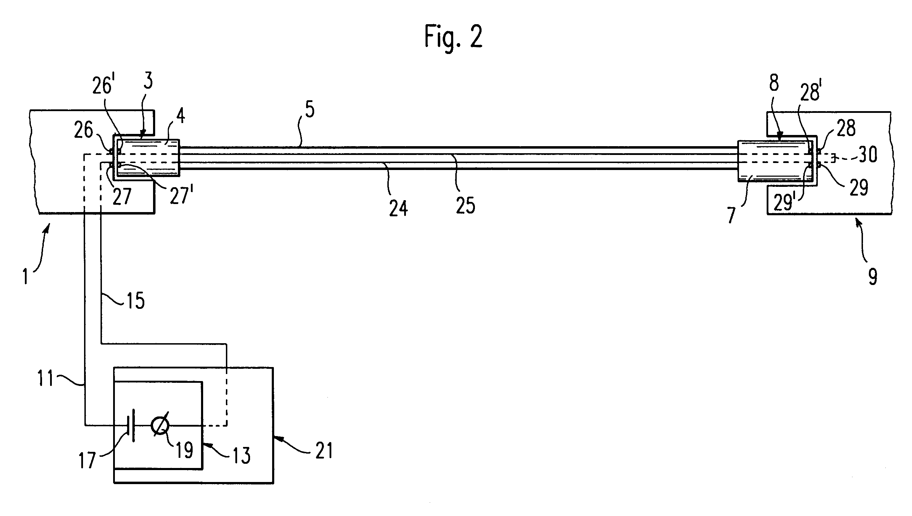

Während in Fig. 1 eine Kupplung mittels an der Bolzenfördereinheit 9 und dem Bolzenschweißkopf 1 angeflanschten zweiten Kupplungselementen 8, 3 darstellt, zeigt Fig. 2 eine Kupplung, bei der die zweiten Kupplungselemente 8, 3 als Buchsen in Bolzenfördereinheit 9 und Bolzenschweißkopf 1 ausgebildet sind.

Weiterhin sind die ersten und zweiten Kupplungselemente 4, 7 bzw. 3, 8 mit jeweils zwei separaten Kontakten 26', 27'; 28', 29' bzw. 26, 27; 28, 29 ausgestattet. Alle Kontakte sind dabei von den Kupplungselementen elektrisch isoliert. Die Meßvorrichtung 13 ist mit ihren Meßanschlüssen über die Leitungen 11 bzw. 15 mit jeweils einem der Kontakte 26, 27 des zweiten Kupplungselementes verbunden. Bei einer korrekten Verbindung zwischen dem zweiten Kupplungselement 3 des Bolzenschweißkopfes 1 und dem ersten Kupplungselement 4 des Verbindungsschlauchs 5 sind die Kontakte 26 und 27 des zweiten Kupplungselementes jeweils mit den komplementären Kontakten 26' und 27' elektrisch leitend verbunden.

An die Kontakte 26' und 27' sind zwei separate, z.B. als Drähte ausgeführte, elektrische Leiter 24 und 25 angeschlossen, die sich über die gesamte Länge des Verbindungsschlauchs 5 erstrecken. Am anderen Ende des Schlauchs 5 sind diese Leiter 24, 25 jeweils mit den Kontakten 28', 29' des ersten Kupplungselementes 7 elektrisch leitend verbunden. Bei einer korrekten Verbindung des ersten Kupplungselementes 7 mit dem dazu komplementären zweiten Kupplungselement 8 sind auch die Kontakte 28', 29' jeweils mit den dazu komplementären Kontakten 28, 29 des zweiten Kupplungselementes der Bolzenfördereinheit 9 verbunden. Die Kontakte 28, 29 des zweiten Kupplungselementes der Bolzenfördereinheit 9 sind durch einen elektrischen Leiter 30, z.B. in Form eines Abschlußwiderstandes oder Kurzschlusses, überbrückt. Auf diese Weise wird bei einer korrekten Verbindung der Kupplungselemente 3, 4 und 7, 8 und einem korrekten Zustand des Verbindungsschlauchs 5 eine Leiterschleife bis zu den Meßanschlüssen der Meßvorrichtung 13 gebildet. Natürlich ist auch eine umgekehrte Ausführung bzw. Spiegelung der Leiterschleife möglich. In diesein Fall würden analog die Meßanschlüsse der Meßvorrichtung 13 mit den Kontakten 28, 29 des zweiten Kupplungselementes 8 der Bolzenfördereinheit 9 verbunden und die Kontakte 26, 27 des zweiten Kupplungselementes 3 des Schweißkopfes 1 mit einem elektrischen Leiter 30 überbrückt werden.

Im korrekten Zustand kann so über diese Leiterschleife die anliegende Spannung der Batterie 17 gemessen werden. Im Störfall wird diese Leiterschleife an irgendeiner Stelle unterbrochen, so daß die Spannung abfällt.

Dieses Meßsignal (Spannungsabfall) kann dann wie im ersten Ausführungsbeispiel zu einein optischen, akustischen Alarm und/oder zur Notabschaltung benutzt werden. Vorteilhafterweise wird auch in diesem Ausführungsbeispiel dieses Meßsignal bzw. Meßergebnis mit der Steuervorrichtung 21, in die die Meßvorrichtung 13 integriert ist, gekoppelt. Die Steuervorrichtung 21 gibt so nur dann eine Zufuhr eines neuen Bolzens 23 aus der Bolzenfördereinheit 9 frei, wenn zusätzlich zu dein Nichtvorhandensein eines Bolzens in dem Bolzenschweißkopf 1 auch ein korrektes Meßsignal von der Meßvorrichtung 13 feststellbar ist.

Außer den beiden beschriebenen Ausführungsbeispielen sind natürlich auch andere spezielle Ausführungsformen der Erfindung möglich. So kann z.B. die Meßvorrichtung 13 mit ihren beiden Meßanschlüssen einerseits mit dem elektrisch leitenden Gehäuse des Bolzenschweißkopfes 1 und andererseits mit dem elektrisch leitenden Gehäuse der Bolzenfördereinheit 9 verbunden sein. Die Gehäuse bestehen dabei vorzugsweise aus Metall und sind mit ihren zweiten Kupplungselementen 3, 8, beispielsweise in Form von Buchsen, elektrisch leitend verbunden. In die oben beschriebenen Varianten einer Leiterschleife werden so zusätzlich die Gehäuse des Verarbeitungsgerätes und der Zuführeinheit eingebunden.

Weiterhin ist es auch möglich, die Leiterschleife zu erden und diese Erdung mittels der Meßvorrichtung 13 zu überwachen.

## Patentansprüche

1. Vorrichtung zum Zuführen von zu verarbeitenden Kleinteilen zu einem Verarbeitungsgerät, insbesondere Bolzenzuführvorrichtung für ein Bolzenschweißgerät, mit
a) einer einen Vorratsbehälter zur Aufnahme der zuzuführenden Kleinteile aufweisenden Zuführeinheit und
b) einem die Zuführeinheit und das Verarbeitungsgerät verbindenden Verbindungselement, welches einen Verbindungskanal für den Transport der Kleinteile aufweist,
**dadurch gekennzeichnet**,
c) daß das Verbindungselement (5) im wesentlichen über seine gesamte Länge elektrisch leitende Mittel (6) aufweist und
d) eine Meßvorrichtung (13) zur Überwachung des ordnungsgemäßen Zustandes und/oder der korrekten Verbindung des Verbindungselements (5) mit der Zuführeinheit und/oder dem Verarbeitungsgerät vorgesehen ist,
e) wobei zumindest ein Meßanschluß der Meßvorrichtung mit einem Ende der elektrisch leitenden Mittel (6) verbunden ist.

2. Vorrichtung nach Anspruch 1, **dadurch gekennzeichnet**, daß die elektrisch leitenden Mittel (6) als ein oder mehrere auf oder in das Verbindungselement eingebrachte elektrische Leiter ausgebildet sind.

3. Vorrichtung nach Anspruch 2, **dadurch gekennzeichnet**, daß die ein oder mehreren elektrischen Leiter als Streifen, Draht oder Drahtgeflecht ausgebildet sind.

4. Vorrichtung nach Anspruch 1, **dadurch gekennzeichnet**, daß die elektrisch leitenden Mittel (6) durch wenigstens eine Schicht aus elektrisch leitendem Material im oder auf dein Mantel des Verbindungselements gebildet sind.

5. Vorrichtung nach einem der vorhergehenden Ansprüche, **dadurch gekennzeichnet**, daß das Verbindungselement (6) als flexibler Schlauch ausgebildet ist.

6. Vorrichtung nach Anspruch 4 oder 5, **dadurch gekennzeichnet**, daß der flexible Schlauch von einem weiteren Sicherheitsschlauch umgeben ist und die elektrisch leitenden Mittel (6) auf oder in dem Sicherheitsschlauch oder zwischen dem flexiblen Schlauch und dem Sicherheitsschlauch ausgebildet sind.

7. Vorrichtung nach einem der vorhergehenden Ansprüche, **dadurch gekennzeichnet**, daß das Verbindungselement (5) an einem oder beiden Enden mittels erster Kupplungselemente (4, 7) mit an der Zuführeinheit (9) und/oder dem Verarbeitungsgerät (1) vorgesehenen komplementären zweiten Kupplungselementen (3, 8) lösbar mit der Zuführeinheit (9) und/oder dem Verarbeitungsgerät (1) verbunden ist und daß die elektrisch leitenden Mittel (6) über die ersten Kupplungselemente (4, 7) elektrisch leitend mit den zweiten Kupplungselementen (3, 8) verbunden sind, wobei ein oder beide zweiten Kupplungselemente (3, 8) mit einem Meßanschluß der Meßvorrichtung (13) verbunden sind.

8. Vorrichtung nach einem der vorhergehenden Ansprüche, **dadurch gekennzeichnet**, daß die Meßvorrichtung (13) als Reflexionsmeßvorrichtung ausgebildet ist.

9. Vorrichtung nach Anspruch 8, **dadurch gekennzeichnet**, daß die elektrisch leitenden Mittel (6) an einem Ende mit einem Abschlußwiderstand (30) verbunden sind.

10. Vorrichtung nach Anspruch 9, **dadurch gekennzeichnet**, daß der Abschlußwiderstand (30) mit den komplementären zweiten Kupplungselementen (3, 8) verbunden ist.

11. Vorrichtung nach einem der Ansprüche 1 bis 7, **dadurch gekennzeichnet**, daß jeweils ein Meßanschluß der Meßvorrichtung (13) mit einem Ende der elektrisch leitenden Mittel (6) elektrisch leitend verbunden ist und die Meßvorrichtung (13) eine oder mehrere elektrische Kenngrößen dieses elektrisch leitenden Pfads bestimmt.

12. Vorrichtung nach einem der Ansprüche 1 bis 7, **dadurch gekennzeichnet**, daß das Verbindungselement (5) zwei separate elektrisch leitende Mittel (24, 25) aufweist, daß jeweils ein Meßanschluß der Meßvorrichtung (13) an ein und demselben Ende des Verbindungselements (5) mit jeweils einem Ende der elektrisch leitenden Mittel (6) elektrisch leitend verbunden ist, daß die anderen Enden der elektrisch leitenden Mittel (6) am jeweils anderen Ende des Verbindungselements (5) elektrisch leitend verbunden sind und daß die Meßvorrichtung (13) eine oder mehrere elektrische Kenngrößen dieses elektrisch leitenden Pfads bestimmt.

13. Vorrichtung nach Anspruch 12, **dadurch gekennzeichnet**, daß die elektrisch leitenden Mittel (6) am anderen Ende des Verbindungselements (5) durch die zweiten Kupplungselemente (3, 8) elektrisch leitend verbunden sind.

14. Vorrichtung nach einem der vorhergehenden Ansprüche, **dadurch gekennzeichnet**, daß eine mit der Meßvorrichtung (13) verbundene Steuervorrichtung (21) für die Zufuhr von zu verarbeitenden Kleinteilen (23) vorgesehen ist und die Steuervorrichtung (21) die Zufuhr von Kleinteilen (23) nur dann freigibt, wenn die Meßvorrichtung (13) den ordnungsgemäßen Zustand und/oder die korrekte Verbindung des Verbindungselements (6) detektiert.

15. Vorrichtung nach einem der vorhergehenden Ansprüche, **dadurch gekennzeichnet**, daß die Meßvorrichtung (13) und die Steuervorrichtung (21) in einem Gehäuse integriert sind.
